# EUROPEAN PATENT APPLICATION

(11) **EP 2 120 012 A1**
(43) Date of publication of application: **18.11.2009**
(21) Application number: 08711154.8
(22) Date of filing: 13.02.2008
(51) Int. Cl.: G01C 21/00, G08G 1/09, G08G 1/0969, G09B 29/00, G09B 29/10, H04M 1/00, H04M 1/247, H04M 11/00

(54) **NAVIGATION DEVICE, NAVIGATION SYSTEM, NAVIGATION METHOD, AND PROGRAM**

(30) Priority: 16.02.2007 JP 2007036258
(71) Applicant: Kabushiki Kaisha Kenwood, Hachioji-shi Tokyo 192-8525 (JP)
(72) Inventor: TOMIZAWA, Katsumi, Chofu-shi Tokyo 182-0016 (JP)
(74) Representative: Leinweber & Zimmermann
(86) International application number: PCT/JP2008/052296
(87) International publication number: WO 2008/099827

(57) **Abstract**

A navigation device (100) is connected to a mobile communication device (150) by a radio communication. The storage unit (106) stores a map DB (131). A control unit (107) acquires telephone book data (132) and history data (133) on calling/called operations performed by the mobile communication device (150) from the mobile communication device (150) and stores the data in the storage unit (106). A telephone number of a partner is correlated with position information which can be set for a navigation destination when they are respectively stored in the telephone book data (132) and the history data (133). A control unit (107) receives an instruction input for selecting as the destination, the position indicated by the position information correlated to the telephone book data (132) or the history data (133). The control unit (107) sets the position indicated by the position information correlated to the selected telephone book data (132) or the history data (133) as the navigation destination. Thus, navigation is supported by using the information store din the mobile communication device.

## Description

### TECHNICAL FIELD

The present invention relates to a navigation device, a navigation system, a navigation method, and a program suitable for supporting navigation using information stored in a mobile communication device.

### BACKGROUND ART

A car-mounted navigation device is a device that provides route guidance information or traffic information to a destination set by a user such as a driver. For example, Patent Document 1 discloses a navigation device that enables a user to set a destination using history such as previously set or previously searched destinations, facilities, and the like. According to Patent Document 1, the navigation device sorts and displays destinations, facilities, and the like stored in the history according to date and time of setting or search, or genres, and a destination can be set using this history. For example, Patent Document 2 discloses a navigation device that displays a list of destination candidates from a history of previous settings based on a current position of a user's own vehicle. According to Patent Document 2, the navigation device extracts and preferentially displays destinations that are near the current position of the user's own vehicle from previously set destinations. As shown, navigation devices employ various ingenuities designed to improve user usability.
Patent Document 1:Japanese Patent Application Laid-Open No. 2005-156290
Patent Document 2:Japanese Patent Application Laid-Open No. 2006-23149

### DISCLOSURE OF THE INVENTION

### PROBLEMS TO BE SOLVED BY THE INVENTION

Furthermore, in recent years, navigation devices that enable hands-free talk and communication by connecting to a mobile communication device (typically, a mobile telephone) via radio communication are becoming popular. For example, a user can operate a navigation device to call a partner or receive a call from the partner using a mobile telephone connected to the navigation device. However, setting a current position of a partner called from a mobile telephone connected to a navigation device requires a user to search the position of the partner after completing the call and to reset the destination, and is therefore troublesome.

The present invention has been made in order to solve such problems, and an object thereof is to provide a navigation device, a navigation system, a navigation method, and a program suitable for supporting navigation using information stored in a mobile communication device.

### MEANS FOR SOLVING THE PROBLEMS

In order to solve the problems described above, a navigation device according to a first aspect of the present invention is a navigation device that guides a route from a point of departure to a destination, and comprises:
a map data storage unit that stores map data;
a position data storage unit that correlates and stores identification information of a communication partner of a mobile communication device connected to the navigation device acquired from the mobile communication device and position data indicating a position of the communication partner;
a measurement unit that measures a position of the navigation device;
a setting unit that accepts an instruction input that selects identification information stored in the position data storage unit from a user, and sets a position indicated by position data corresponding to the selected identification information as the destination; and
an output unit that acquires, from the map data storage unit, map data indicating a route from a position measured by the measurement unit to the destination set by the setting unit, and outputs the acquired map data.

The identification information may include a telephone number or an e-mail address of a partner of communication performed using the mobile communication device.

The navigation device can further comprise
a calling operation control unit which, when the position measured by the measurement unit reaches within a predetermined distance range from the destination set using the setting unit, either
(a) causes the mobile communication device to call a telephone number indicated by the identification information or
(b) causes the mobile communication device to send an e-mail to an e-mail address indicated by the identification information.

The navigation device can further comprise:
a timer unit that measures a period of time elapsed since departing the point of departure; and
a calling operation control unit which, when the period of time measured by the timer unit reaches or exceeds a predetermined period of time, either
   (a) causes the mobile communication device to call a telephone number indicated by the identification information or
   (b) causes the mobile communication device to send an e-mail to an e-mail address indicated by the identification information.

A navigation system according to a second aspect of the present invention is a navigation system comprising a mobile communication device and a navigation device that guides a route from a point of departure to a destination, wherein
the mobile communication device includes:
an identification information storage unit that stores, in advance, identification information of a communication partner; and
a communication unit that receives a call from an external communication device or calls an external communication device based on a request from the navigation device, while
the navigation device includes:
   a map data storage unit that stores map data;
   a position data storage unit that acquires the identification information from the mobile communication device, and correlates and stores the acquired identification information and position data indicating a position;
   a measurement unit that measures a position of the navigation device;
   a setting unit that accepts an instruction input that selects identification information stored in the position data storage unit from a user, and sets a position indicated by position data corresponding to the selected identification information as the destination;
   an output unit that acquires, from the map data storage unit, map data indicating a route from a position measured by the measurement unit to the destination set by the setting unit, and outputs the acquired map data; and
   a request unit that requests the mobile communication device to make a call based on the identification information stored in the position data storage unit and the position measured by the measurement unit.

The mobile communication device of the navigation system further comprises a notification unit which, when the communication unit receives a call from an external communication device, acquires identification information of the communication device from the identification information storage unit and notifies the identification information to the navigation unit, wherein
the setting unit is capable of acquiring position data corresponding to the identification information notified by the notification unit from the position data storage unit and setting the position indicated by the acquired position data as the destination.

The request unit of the navigation device of the navigation system is capable of requesting the mobile communication unit to make a call based on the identification information when the position measured by the measurement unit reaches within a predetermined distance range from the destination set by the setting unit.

The navigation device of the navigation system further comprises a timer unit that measures a period of time elapsed since departing the point of departure, wherein
the request unit is capable of requesting the mobile communication unit to make a call based on the identification information when the period of time measured by the timer unit reaches or exceeds a predetermined period of time.

A navigation method according to a third aspect of the present invention is a navigation method to be executed by a navigation device that includes a storage unit and guides a route from a point of departure to a destination, wherein
the storage unit stores map data, and correlates and stores identification information of a communication partner of a mobile communication device connected to the navigation device acquired from the mobile communication device and position data indicating a position of the communication partner,
the navigation method comprising:
a measurement step for measuring a position of the navigation device;
a setting step for accepting an instruction input that selects identification information stored in the storage unit from a user, and setting a position indicated by position data corresponding to the selected identification information as the destination; and
an output step for acquiring map data indicating a route from a position measured in the measurement step to the destination set in the setting step from the storage unit, and outputting the acquired map data.

A program according to a fourth aspect of the present invention causes a computer which guides a route from a point of departure to a destination to function as:
a map data storage unit that stores map data;
a position data storage unit that correlates and stores identification information of a communication partner of a mobile communication device connected to the computer acquired from the mobile communication device and position data indicating a position of the communication partner;
a measurement unit that measures a position of the computer;
a setting unit that accepts an instruction input that selects identification information stored in the position data storage unit from a user, and sets a position indicated by position data corresponding to the selected identification information as the destination; and
an output unit that acquires, from the map data storage unit, map data indicating a route from a position measured by the measurement unit to the destination set by the setting unit, and outputs the acquired map data.

In addition, the program according to the present invention can be recorded onto a computer-readable information storage medium such as a compact disc, a flexible disk, a hard disk, a magneto optical disc, a digital video disc, a magnetic tape, and a semiconductor memory.

The program can be distributed and sold via a computer communication network independently of the computer on which the program is executed. In addition, the information storage medium can be distributed and sold independently of the computer.

### EFFECT OF THE INVENTION

According to the present invention, navigation can be supported using information stored in a mobile communication device.

### BRIEF DESCRIPTION OF THE DRAWINGS

FIG. 1 is a block diagram showing a configuration of a navigation device according to the present invention;
FIG. 2 is a diagram showing a configuration example of telephone book data;
FIG. 3 is a diagram showing a configuration example of history data;
FIG. 4 is a block diagram showing a configuration of a mobile communication device;
FIG. 5 is a flowchart for explaining update processing of telephone book data and history data;
FIG. 6 is a flowchart for explaining destination setting processing;
FIGS. 7(a) to 7(c) are configuration examples of a screen for selecting a destination;
FIG. 8 is a flowchart for explaining calling operation processing according to a second embodiment;
FIGS. 9(a) to 9(c) are configuration examples of a screen for inputting a calling operation destination;
FIG. 10 is a flowchart for explaining calling operation processing according to a third embodiment;
FIG. 11 is a flowchart for explaining destination setting processing according to a fourth embodiment; and
FIGS. 12(a) to 12(c) are configuration examples of a screen for setting a destination.

### DESCRIPTION OF SYMBOLS

- 100: Navigation device
- 101: Communication unit
- 102: Audio processing unit
- 103: Output unit
- 104: Operation unit
- 105: Interface
- 106: Storage unit
- 107: Control unit
- 108: ROM
- 109: RAM
- 110: System bus
- 121: Antenna
- 122: Speaker
- 123: Microphone
- 124: Monitor
- 125: Touch panel
- 131: Map DB
- 132: Navigation device-side telephone book data
- 133: Navigation device-side history data
- 150: Mobile communication device
- 151: Radio communication unit
- 152: Audio processing unit
- 153: Output unit
- 154: Interface
- 155: Input unit
- 156: ROM
- 157: RAM
- 158: Control unit
- 159: System bus
- 161: Antenna
- 162: Speaker
- 163: Microphone
- 164: LCD
- 165: Memory card
- 166: Operation key
- 171: Mobile communication device-side telephone book data
- 172: Mobile communication device-side history data

### BEST MODES FOR CARRYING OUT THE INVENTION

### (First embodiment)

Hereinafter, a configuration of a navigation device 100 according to a first embodiment of the present invention will be described. In the present embodiment, the navigation device 100 will be described using, as an example, a car-mounted navigation device connectable to a mobile telephone. Moreover, the navigation device 100 may be a computer or the like connectable to another communication device such as a PHS (Personal Handy-phone System) or a PDA (Personal Digital Assistant).

In the following description, it is assumed that destinations include points and areas to become a final location of a route when the navigation device 100 searches for a travel route and provides a user with navigation data including search results, as well as points and areas specified as transit points (stop-off points) between a current position and the final location. Specifically, a destination refers to an arbitrary point, area, building, facility, and the like.

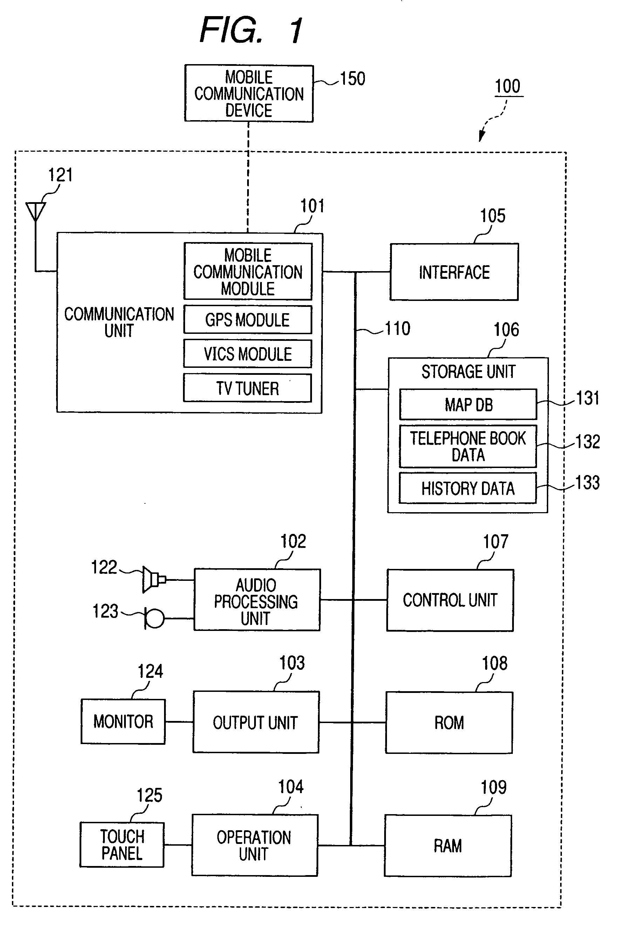

FIG. 1 is a block diagram for explaining a configuration of the navigation device 100. The navigation device 100 includes a communication unit 101, an audio processing unit 102, an output unit 103, an operation unit 104, an interface 105, a storage unit 106, a control unit 107, a ROM (Read Only Memory) 108, a RAM (Random Access Memory) 109, and a system bus 110.

The communication unit 101 includes a mobile communication module, a GPS (Global Positioning System) module, a VICS (Vehicle Information and Communication System) module, and a television broadcast (TV) tuner.

The mobile communication module transmits to and receives from a mobile communication device 150 various data to be used to connect the navigation device 100 with the mobile communication device 150 to communicate and exchange calls. The mobile communication device 150 is, for example, a mobile telephone that can be separated and carried along by a user, and is capable of communicating with the communication unit 101 by means of radio communication. When the navigation device 100 exists in a communicable range of the mobile communication device 150, audio data when a call is received from a communication partner, audio data when making a call to a communication partner, and the like, can be transmitted to and received from the communication unit 101. For example, when a call is made to or from the mobile communication device 150, the user is able to talk using a speaker 122 and a microphone 123 of the navigation device 100 without having to directly operate the mobile communication device 150. The mobile communication device 150 is also capable of calling and communicating independently without having to connect to the navigation device 100 when so instructed by the user. Moreover, while the communication unit 101 and the mobile communication device 150 communicate using a radio communication system in the present embodiment, wired communication systems in which connections are established using a predetermined cable or the like may be used instead. Communication systems are not limited by the present invention and are therefore arbitrary.

The GPS module of the communication unit 101 measures a position of a user's vehicle, on which the navigation device 100 is installed, based on radio waves from a GPS satellite. The control unit 107 acquires position data describing the position of the user's vehicle in latitude and longitude by controlling the GPS module. Position data can also be acquired in advance by other measuring devices. The VICS module receives road information (for example, information on traffic congestions, traffic regulations, traffic accidents, and the like) from FM multiple broadcasting or the like. The TV tuner receives video and audio signals related to VHF or UHF television airwaves. While the communication unit 101 transmits and receives radio waves using an antenna 121 connected to the communication unit 101, the antenna 121 may either be shared among GPS, VICS, and TV or separate antennas may be respectively provided. In addition, the communication unit 101 may acquire road information and the like by performing data communication using the DSRC (Dedicated Short Range Communication) system with a predetermined data transceiver installed along a road.

As described above, while the navigation device 100 and the mobile communication device 150 according to the present embodiment are separate detachable devices, an integrated navigation device 100 capable of mobile communication such as a mobile telephone may be used instead.

The audio processing unit 102 converts a digital audio signal inputted from the control unit 107 into an analog audio signal using a D/A (Digital/Analog) converter (not shown), and outputs the analog audio signal to the speaker 122. In addition, the audio processing unit 102 converts audio inputted from the microphone 123 into a digital audio signal using an A/D (Analog/Digital) converter (not shown), and inputs the digital audio signal to the control unit 107. Consequently, the user can listen to navigation audio or CD (Compact Disc) playback audio, or input audio.

The output unit 103 generates an image display signal based on data inputted from the control unit 107, and outputs the generated image to a monitor 124. Typically, an LCD (Liquid Crystal Display) is used as the monitor 124. The output unit 103 displays traffic information acquired by the communication unit 101, TV images, map images stored in advance in the storage unit 106, generated navigation information, and the like on the monitor 124. Consequently, the user can view desired information.

The operation unit 104 generates an instruction input signal based on an instruction input inputted from a touch panel 125, and inputs the instruction input signal to the control unit 107. Typically, the touch panel 125 is installed so as to overlap the display screen of the monitor 124, and is correlated with the monitor 124 such that coordinates on the monitor 124 and coordinates on the touch panel 125 appear to be consistent from the user's perspective. Accordingly, the user can instruct a desired operation by touching the touch panel 125 at operation button portions or icon portions displayed on the monitor 124. Moreover, other input devices such as keys, buttons, switches and the like operable by the user may be provided besides the touch panel 125.

The interface 105 includes a DVD-ROM (Digital Versatile Disk-Read Only Memory) drive, and reads data from a storage medium such as a DVD-ROM or a CD-ROM containing predetermined map data and navigational data (for example, guidance data for a facility or the like) and inputs the data to the control unit 107. The control unit 107 records map data or the like read from the storage medium into the storage unit 106. Consequently, the user can update map data and the like stored in the storage unit 106 to the latest data. In addition, the user can play and listen to or view music CDs, movie DVDs, and the like. The interface 105 may also include a data input/output interface for other devices/storage media. The control unit 107 may cause the communication unit 101 to receive the latest map data and the like from a predetermined distribution device that distributes map data and the like to update map data and the like stored in the storage unit 106.

The storage unit 106 includes a storage device such as a hard disk drive, and stores a database 131 storing map data and navigational data (hereinafter referred to as "map DB") as well as traffic information received by the communication unit 101, various setting information, and the like. The map DB 131 and the like stored in the storage unit 106 can be rewritten as needed to the latest data under instructions from the user or the control unit 107. Moreover, the storage unit 106 may include other memories such as a flash memory. Alternatively, the user may write/read arbitrary data into/from an attachable/detachable memory card or the like. The control unit 107 may be arranged so as to read, as necessary, information on maps, facilities or the like from a DVD-ROM or the like mounted in the DVD-ROM drive, or read a part of or all of the data from a storage medium in advance and save (install) the data in the storage unit 106.

In addition, the storage unit 106 stores a predetermined number of items of telephone book (address book) data 132 to be used for calling and communicating using the mobile communication device 150. The control unit 107 can create, update, and delete an arbitrary item of telephone book data 132 based on an instruction input from the user to the touch panel 125 or the like.

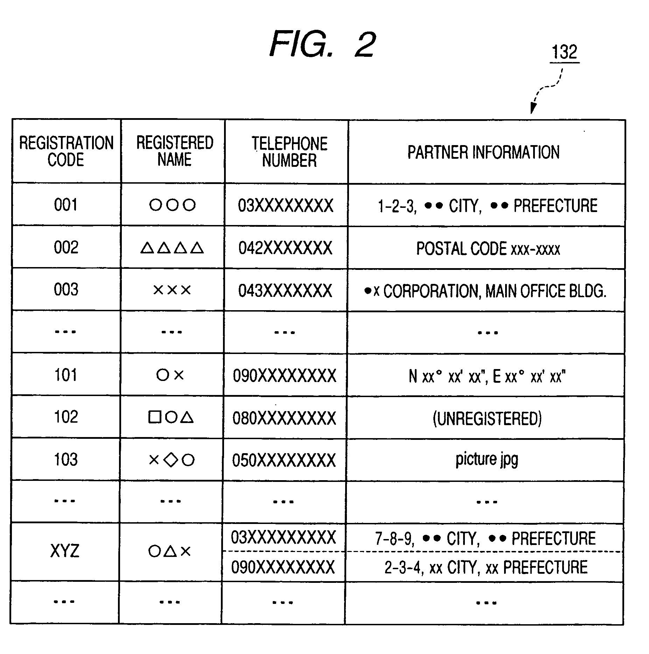

FIG. 2 is a diagram showing a configuration example of telephone book data 132. In this example, for telephone book data 132, a registration code, a registered name, a telephone number, and partner information are correlated and stored. A registration code is a piece of information unique within the telephone book data 132, and can be set by the user or the control unit 107 using numerals, characters, symbols, images, and the like. A registered name is the name or a nickname of a communication partner, and can be freely set by the user using numerals, characters, symbols, images, and the like. A telephone number is a telephone number (subscriber number) of a mobile telephone, land-line telephone, and the like owned by the communication partner. Partner information is additional information regarding details of a communication partner including an address, contact information, a postal code, a name of a company, latitude and longitude information, an image, a profile, and the like. Information indicating a position that can be set as a navigation destination such as an address, a postal code, a facility name, latitude and longitude, and the like can be included in the partner information. Partner information is information to be arbitrarily registered by the user, and there may be cases where partner information is not registered (in the diagram, partner information is denoted as "unregistered"). Moreover, the configuration of telephone book data 132 described herein is merely an example, and changes, additions, and omissions can be arbitrarily made thereto. For example, for the storage unit 106, a plurality of telephone numbers or pieces of partner information may be correlated and stored with one registration code or one registered name.

The storage unit 106 may also store telephone book data 132 in a hierarchical structure (in so-called electronic folders and directories). For example, subfolders with names such as "family", "friends", "company" and the like can be created to store telephone book data 132 in association with such subfolders. The number of folders, the number of hierarchical levels, the names of the folders and the like are arbitrary.

Furthermore, the storage unit 106 stores a predetermined number of items of history data 133 of calling/called operations performed by the mobile communication device 150. For example, when the user operates the navigation device 100 to call a communication partner from the mobile communication device 150, the control unit 107 causes the storage unit 106 to store the telephone number of the communication partner, the time the call was made, and the like as history data 133. In addition, when the user receives a call from a communication partner with the mobile communication device 150 connected to the navigation device 100, the control unit 107 causes the storage unit 106 to store the telephone number of the communication partner, the time the call was received, and the like as history data 133. While the control unit 107 typically automatically stores history data 133 whenever a call is made/received, history data 133 may instead be recorded, updated, and deleted according to an instruction input by the user. When the number of items of calling/called operations exceeds a predetermined number of items, the control unit 107 deletes the oldest history data 133 item from the storage unit 106.

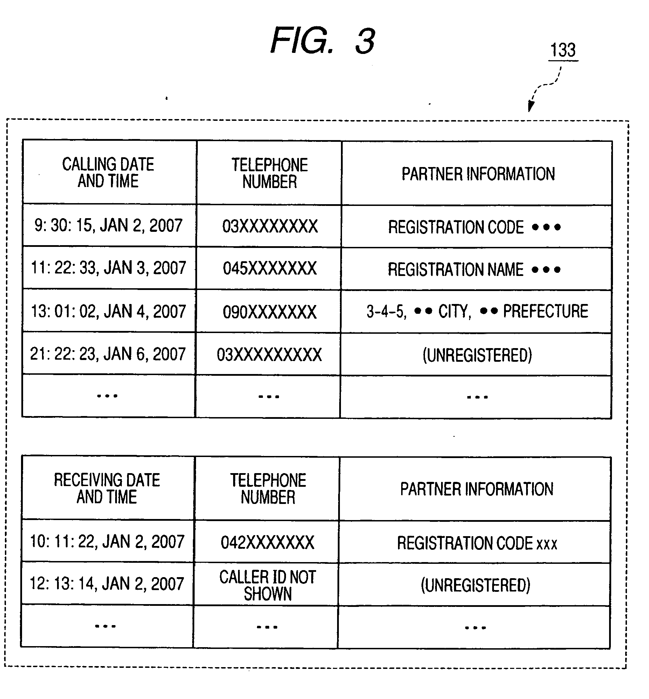

FIG. 3 is a diagram showing a configuration example of history data 133. In this example, the storage unit 106 correlates and stores the time at which a calling/called operation took place, a telephone number of a communication partner, and partner information. The calling date and time or the called date and time is the date and time the mobile communication device 150 had called or received a call from the communication partner. The telephone number is the telephone number of the communication partner when the mobile communication device 150 had called or received a call from the communication partner. The partner information is similar to the partner information in the telephone book data 132, and when the telephone number or the like of the partner who had made/received the call is already stored in the telephone book data 132, the registration code or the registered name of the corresponding telephone book data 132 may be stored. Partner information is information that can be arbitrarily recorded by the user, and there may be cases where partner information is not registered. Moreover, the configuration of history data 133 described herein is merely an example and changes, additions, and omissions can be arbitrarily made thereto.

The control unit 107 comprises a CPU (Central Processing Unit), and controls overall operations of the navigation device 100 and connects to the various components to exchange control signals and data. In addition, the control unit 107 is capable of performing arithmetic operations such as addition, subtraction, multiplication, division, and the like, logic operations such as logical addition, logical multiplication, logical negation and the like, and bitwise operations such as bitwise OR, bitwise AND, bitwise inversion, bitwise shift, bitwise rotation, and the like using an ALU (Arithmetic Logic Unit) (not shown) on a storage area that enables high-speed access referred to as a register (not shown). Furthermore, the control unit 107 is configured so as to be capable of performing saturate calculations such as addition, subtraction, multiplication, and division to accommodate multimedia processing, trigonometrical function and the like, and vector operations and the like at high speed. Alternatively, the control unit 107 may be realized so as to include a coprocessor. In addition, the control unit 107 can acquire a current date and time from a clock (not shown) that measures date and time or from information obtained by the GPS.

Specifically, the control unit 107 uses a current position acquired via the GPS, map data stored in the map DB 131, traffic information acquired via the VICS, and the like to search candidates of travel routes from a point of departure or a current position to a destination, and cause the monitor 124 to display navigation data such as a route diagram of a search result. Methods of generating and displaying navigation data are not limited by the present invention.

In addition, the control unit 107 is capable of reading, updating, adding, and deleting the same telephone book data 132 and history data 133 stored in the storage unit 106 at arbitrary timings. For example, when the mobile communication device 150 exists at a position where communication can be performed with the communication unit 101, the control unit 107 controls the communication unit 101 to transmit/receive data corresponding to the telephone book data 132 or data corresponding to the history data 133 stored in a memory (not shown) built into the mobile communication device 150 and attain synchronization. Accordingly, the navigation device 100 can update the telephone book data 132 and the history data 133 to the latest data. Details of update processing of these data will be described later.

Furthermore, when the mobile communication device 150 exists at a position where communication can be performed with the communication unit 101, the control unit 107 causes the audio processing unit 102 to convert audio collected by the microphone 123 into audio data, and controls the communication unit 101 to transmit the audio data to the mobile communication device 150. On the other hand, the control unit 107 controls the communication unit 101 to receive audio data from the mobile communication device 150, and causes the audio processing unit 102 to convert the received audio data into audio and causes the speaker 122 to output the audio. Accordingly, the navigation device 100 can perform calling and communication using the connected mobile communication device 150. That is, the user is able to talk using the speaker 122 and the microphone 123 of the navigation device 100 without having to directly operate the mobile communication device 150.

The ROM 108 records an operating system (OS), programs, and various data necessary for operation control of the entire navigation device 100.

The RAM 109 is for temporarily storing data and programs. Data acquired by the communication unit 101, data read from a DVD-ROM, and the like are temporarily retained in the RAM 109. In addition, the control unit 107 sets up a variable area in the RAM 109, and performs processing such as: performing computations using an ALU on values stored in the variables; temporarily storing, in a register, values stored in the RAM 109, performing computations on the register, and write back the computation results into the RAM 109, and the like.

The system bus 110 is a transmission path for transferring commands and data among the communication unit 101, the audio processing unit 102, the output unit 103, the operation unit 104, the interface 105, the storage unit 106, the control unit 107, the ROM 108, and the RAM 109.

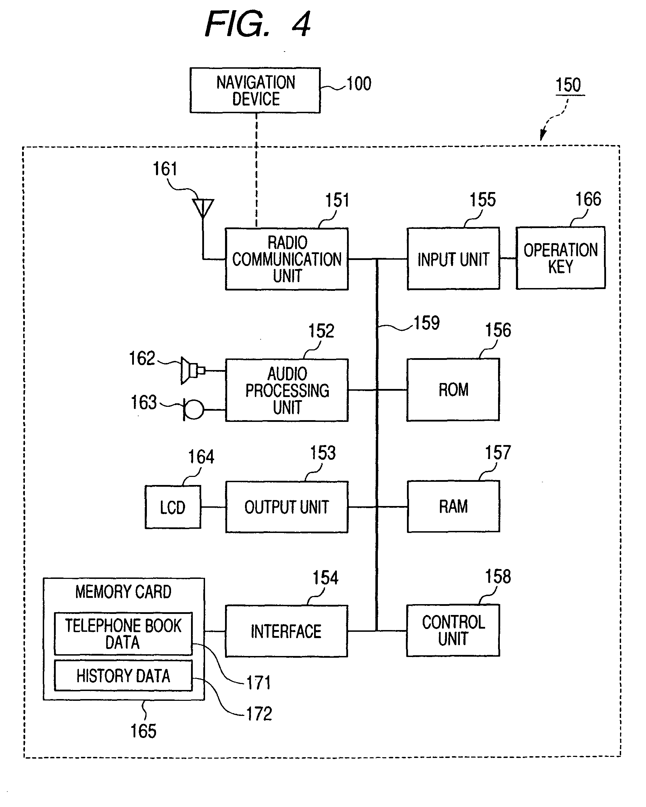

Next, a configuration of the mobile communication device 150 will be described using FIG. 4. The mobile communication device 150 comprises a radio communication unit 151, an audio processing unit 152, an output unit 153, an interface 154, an input unit 155, a ROM 156, a RAM 157, a control unit 158, and a system bus 159. While the mobile communication device 150 is typically a mobile telephone, the mobile communication device 150 may also be a PHS, a PDA, a computer provided with a modem, or the like.

When the mobile communication device 150 becomes a transmitter, the radio communication unit 151 modulates an audio signal inputted to the microphone 163 and converted by an A/D converter (not shown) included in the audio processing unit 152, and transmits the modulated audio signal to a partner (receiving side) using an antenna 161 included in the radio communication unit 151. In addition, when the mobile communication device 150 becomes a receiver, the radio communication unit 151 receives an audio signal or the like using the antenna 161 included in the radio communication unit 151, demodulates the audio signal, and inputs the same to the audio processing unit 152. The audio signal is converted into audio using a D/A converter (not shown) included in the audio processing unit 152, and is outputted as audio from a speaker 162.

In addition, the radio communication unit 151 transmits/receives various data by connecting to the navigation device 100 via radio communication. The radio communication system when connecting with the navigation device 100 is desirably a system that differs from radio communication used in telephone transmission/reception (for example, radio communication using electromagnetic waves of a different frequency band, infrared communication, and the like).

When the mobile communication device 150 becomes a transmitter, the audio processing unit 152 collects voices and the like of the user with the microphone 163, converts the same into an audio signal using the A/D converter included in the audio processing unit 152, and outputs the audio signal to the radio communication unit 151. In addition, when the mobile communication device 150 becomes a receiver, the audio processing unit 152 outputs call audio demodulated by the D/A converted included in the audio processing unit 152 to the speaker 162. Furthermore, the audio processing unit 152 is also capable of outputting audio data received by the radio communication unit 151 from the navigation device 100 to the speaker 162, and inputting audio data collected by the microphone 163 and converted thereafter to the radio communication unit 151 and transmitting the converted audio data to the navigation device 100.

The output unit 153 processes image data with an image computation processor (not shown) included in the control unit 158 or the output unit 153, and records the same onto a frame buffer included in the output unit 153. Image information recorded on the frame buffer is converted into an image signal at a predetermined synchronization timing such as vertical synchronization, and is outputted to an LCD 164 connected to the output unit 153. Accordingly, various types of image display can be performed. Other display devices such as an organic EL (Organic Light Emitting Diode) may be used instead of the LCD 164.

The interface 154 connects to an attachable/detachable memory card 165, a UIM (Universal Identity Module) card, or the like, and performs data input/output. For example, the memory card 165 connected to the interface 154 stores: telephone book data 171 (data corresponding to telephone book data 132 of the navigation device 100 side) to be used for telephone calls and e-mails; history data 172 (data corresponding to history data 133 of the navigation device 100 side) indicating communication history, and the like. The information can be stored in another rewritable storage area such as a flash memory area of the RAM 157. The interface 154 may further include an interface that enables connection to another external device (such as a navigation device) via a predetermined cable or the like.

The input unit 155 accepts an operation signal from an operation key 166, and inputs a key code signal corresponding to the operation signal to the control unit 158. The control unit 158 determines operation contents based on the inputted key code signal. The user can input arbitrary text data or a predetermined operation command (for example, a power on/off command) using the operation key 166.

The ROM 156 is a nonvolatile memory storing an operating system (OS), programs, and the like necessary for control of the entire mobile communication device 150.

The RAM 157 temporarily stores data, programs, and the like necessary for processing to be performed by the control unit 158. In addition, a part of the storage area of the RAM 157 may be comprised of a flash memory and may store telephone book data 171, history data 172, set values of various functions, and the like.

The control unit 158 controls the entire mobile communication device 150 according to an OS or a control program stored in the ROM 156. In response to control requirements, the control unit 158 either transmits control signals and data to the respective units or receives response signals and data from the respective units. In addition, the control unit 158 can acquire a current date and time from a clock (not shown) that measures date and time.

The system bus 159 is a transmission path for transferring commands and data among the respective units described above.

When communicable with the navigation device 100 via the radio communication unit 151, the mobile communication device 150 configured as described above is capable of transmitting/receiving the telephone book data 171 and the history data 172 stored in the mounted memory card 165 and the like to/from the navigation device 100, and synchronizing the telephone book data 171 and the history data 172 with the telephone book data 132 and the history data 133 stored in the storage unit 106 of the navigation device 100.

### (Update processing)

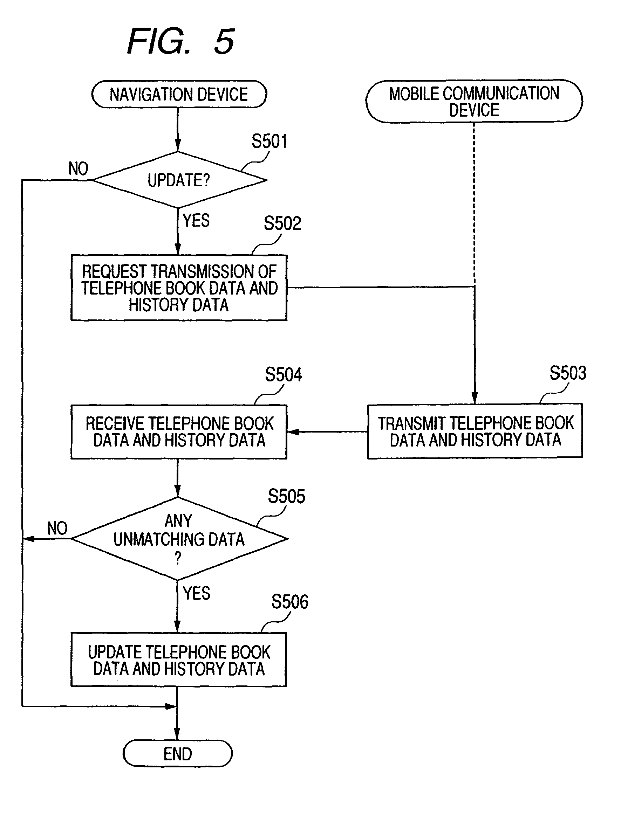

Next, update processing of the telephone book data 132 and the history data 133 stored in the storage unit 106 will be described using the flowchart shown in FIG. 5. The update processing is performed by the various units of the navigation device 100 working in collaboration with each other. While the timing where update processing is performed is arbitrary, update processing is typically performed at a timing where the communication unit 101 becomes communicable with the mobile communication device 150, a timing where an instruction is issued by the user, or the like.

First, the control unit 107 determines whether or not the telephone book data 132 and the history data 133 stored in the storage unit 106 are to be updated (step S501). For example, the control unit 107 makes the determination based on whether or not an instruction input for updating has been made to the operation unit 104.

When it is determined that updating is not to be performed (step S501; NO), the control unit 107 ends the update processing.

When it is determined that updating is to be performed (step S501; YES), the control unit 107 controls the communication unit 101 and requests the mobile communication device 150 to transmit telephone book data 171 and history data 172 (step S502).

The control unit 158 of the mobile communication device 150 controls the radio communication unit 151 to transmit the telephone book data 171 and the history data 172 to the navigation device 100 (step S503).

The control unit 107 of the navigation device 100 controls the communication unit 101 to receive the telephone book data 171 and the history data 172 from the mobile communication device 150 (step S504).

The control unit 107 determines whether or not there is data included in the telephone book data 132 and the history data 133 stored in the storage unit 106 which is unmatched with data received in step S504 (step S505).

When it is determined that there are no unmatched data or, in other words, all telephone book data 132 and history data 133 match those stored on the mobile communication device 150 side (step S505; NO), the control unit 107 ends the update processing.

When it is determined that there is unmatched data or, in other words, there is data among the telephone book data 132 and the history data 133 stored in the storage unit 106 which do not match data stored on the mobile communication device 150 side (step S505; YES), the control unit 107 updates the telephone book data 132 and the history data 133 determined to be unmatched and synchronizes the data (step S506).

Moreover, in step S501, the control unit 107 may determine whether or not the mobile communication device 150 exists at a position communicable with the communication unit 101 (whether or not a state exists in which communication can be performed with the mobile communication device 150), and when it is determined that the mobile communication device 150 exists at a position communicable with the communication unit 101 (a state exists in which communication can be performed with the mobile communication device 150) and a predetermined period of time has elapsed from when update processing was last performed, the control unit 107 may determine that the telephone book data 132 and the history data 133 are to be updated (step S501; YES). In this case, the control unit 107 causes data indicating the date and time the update processing was performed to be stored in the storage unit 106 or a predetermined storage area of the RAM 109, and arranges an elapsed time from when update processing was last performed so as to be acquirable. The predetermined period of time is set in advance and stored in the storage unit 106.

In addition, in step S504, the control unit 107 may be arranged so as to receive only data that differs from when the update processing was last performed among the telephone book data 171 and the history data 172 stored in the memory card 165 of the mobile communication device 150. In this case, the control unit 158 of the mobile communication device 150 can cause a flag indicating whether or not an update has been performed to be further stored in correlation with the telephone book data 171 or the history data 172, whereby the control unit 107 of the navigation device 100 can receive the flag in combination with the data so as to be able to determine which of the data has been updated. Alternatively, the control unit 158 of the mobile communication device 150 can cause version information, date and time of last update, or the like to be further stored in correlation with the telephone book data 171 or the history data 172, whereby the control unit 107 of the navigation device 100 can receive the version information or the date and time of the last update in combination with the data so as to be able to determine which of the data has been updated.

While the control unit 107 according to the present invention transmits/receives data via radio communication by controlling the communication unit 101 to perform update processing, data may alternatively be transmitted/received by other communication methods using a predetermined communication cable or the like. In addition, a configuration is also possible in which the control unit 158 of the mobile communication device 150 causes the telephone book data 171 and the history data 172 to be stored in an attachable/detachable storage medium such as the memory card 165, whereby the control unit 107 acquires various data from the storage medium when the user mounts the storage medium to a predetermined reading device included in the interface 105 of the navigation device 100.

### (Destination setting processing)

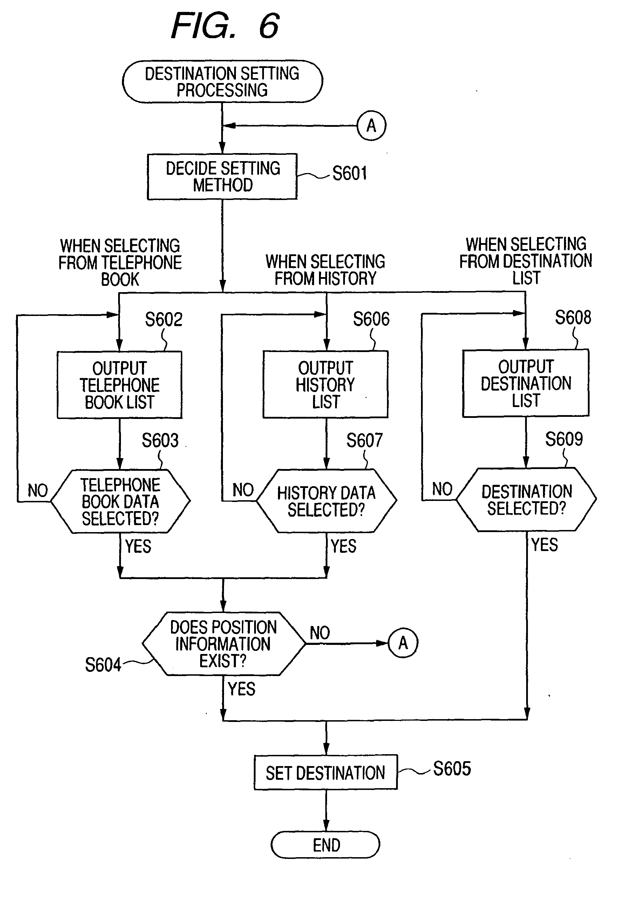

Next, processing performed by the navigation device 100 to set a destination will be described using the flowchart shown in FIG. 6. In the present embodiment, the control unit 107 sets a destination using any of the methods of (1) setting a destination based on the telephone book data 132, (2) setting a destination based on the history data 133, and (3) selecting a destination from a predetermined destination list. In other words, the user can set a destination using a desired method among (1) to (3). A detailed description will now be presented.

First, the control unit 107 determines which of the methods (1) to (3) described above is to be used to set a destination (step S601). For example, the control unit 107 causes the monitor 124 to display a screen that enables the user to select which of the methods (1) to (3) described above is to be used to set a destination, and makes a determination based on an instruction input by the user.

In this case, a predetermined destination list refers to a list of extracted candidates such as place names, facility names, and the like included in the map DB 131 in advance and which can be set as a navigation destination. The list may include destination candidates provided as defaults from the map data provider or destination candidates freely edited by the user and stored in the storage unit 106.

### (Case 1) When setting a destination based on telephone book data 132:

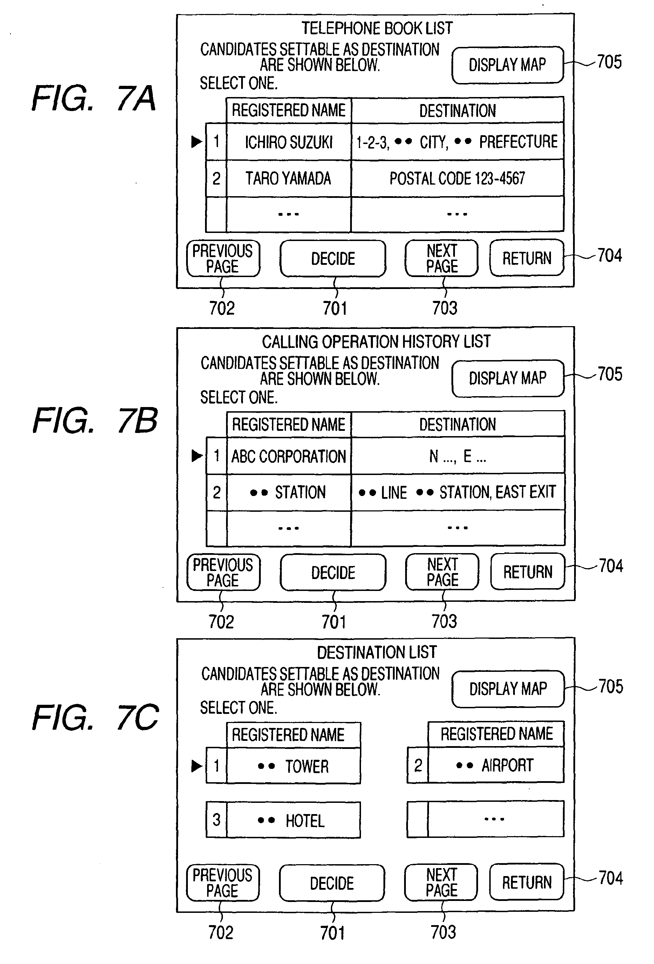

The control unit 107 reads out telephone book data 132 stored in the storage unit 106, and causes the monitor 124 to display a telephone book list such as that shown in FIG. 7(a) (step S602). The control unit 107 causes a button 701 for deciding a destination, buttons 702 and 703 for displaying a next (or a previous) page, and the like on the monitor screen. Either all information of respective records of the telephone book data 132 or only a part thereof (e.g., registered names) may be included in the telephone book list. In the case the telephone book data 132 is stored in advance with a hierarchical structure including subfolders and the like, the control unit 107 first has the user select a subfolder, and subsequently causes a list of telephone book data 132 belonging to the selected subfolder to be displayed. When the hierarchy consists of a plurality of hierarchical levels, repeating this procedure shall suffice.

The control unit 107 determines whether or not any of the telephone book data 132 items in the telephone book list have been selected by the user (step S603).

When an telephone book data 132 item is not selected (step S603; NO), the control unit 107 waits until any of the telephone book data 132 items is selected by the user. At this point, the control unit 107 may cause the monitor 124 to display a button 704 for once again selecting a setting method, whereby the processing is arranged so as to return to step S601 when the button 704 is pressed. When a telephone book data 132 item has been selected (step S603; YES), the control unit 107 determines whether or not information indicating a position that can be set as a destination is correlated with the selected telephone book data 132 item (step S604). For example, in the case where a telephone book data 132 item such as that shown in FIG. 2 is stored in the storage unit 106, a determination is made on whether or not position information indicating an address, a postal code, a facility name, latitude and longitude, or the like sufficient to be set as a destination is correlated with partner information of the selected telephone book data 132 item.

When position information exists (step S604; YES), the control unit 107 sets the position indicated by the position information correlated with the selected telephone book data 132 item as the navigation destination (step S605). The control unit 107 then searches a route for traveling to the set destination from the map DB 131 and displays the route on the monitor 124 to start navigation. Specific methods of searching and displaying a route are not limited by the present invention.

When no position information exists (step S604; NO), the control unit 107 returns to the processing of step S601.

Moreover, when sufficient position information for searching a route from the current position to the destination is not included in step S604, the control unit 107 may be arranged so as to determine that position information does not exist (step S604; NO) even when position information is correlated. Specifically, this includes cases of: insufficient data such as when only a prefecture name, a city/town name, or the first three digits of a postal code are given; invalid data indicating a position that does not actually exist; improper data, and the like. Alternatively, the control unit 107 may be configured so as to notify the user that more detailed position information is necessary and to accept input of position information.

In addition, when a plurality of position data items are correlated with one telephone book data 132 item, the control unit 107 need only accept an instruction input specifying which of the plurality of position data items is to be selected from the user, and select a single position data item based on the accepted instruction input.

### (Case 2) When setting a destination based on history data 133:

The control unit 107 reads out history data 133 stored in the storage unit 106, and causes the monitor 124 to display a calling operation history list such as that shown in FIG. 7(b) (step S606). A called operation history list may be used instead. The control unit 107 may accept an instruction input specifying whether to display a calling operation history list or a called operation history list from the user, and display either of the history lists based on the instruction input. Alternatively, the control unit 107 may display both the calling and called operation history lists on the same screen. The calling and called operation history lists may either include all information of respective records of the history data 133 or a part thereof (e.g., only telephone numbers, or only registered names if available).

The control unit 107 determines whether or not any of the history data 133 items in the calling (called) history list has been selected by the user (step S607).

When a history data 133 item is not selected (step S607; NO), the control unit 107 waits until any of the history data 133 items is selected by the user. At this point, the control unit 107 may cause the monitor 124 to display a button 704 for once again selecting a setting method, whereby the processing is arranged so as to return to step S601 when the button 704 is pressed.

When a history data 133 item has been selected (step S607; YES), the control unit 107 determines whether or not information indicating a position that can be set as a destination is correlated with the selected history data 133 item (step S604). For example, in the case where a history data 133 item such as that shown in FIG. 3 is stored in the storage unit 106, a determination is made on whether or not position information such as an address, a postal code, a facility name, latitude and longitude, or the like sufficient to be set as a destination, or a registered name or registration number of a telephone book data 132 item, is correlated with partner information of the selected history data 133 item.

When position information exists (step S604; YES), the control unit 107 sets the position indicated by the position information correlated with the selected history data 133 item as the navigation destination (step S605). Subsequently, in the same manner as in Case 1, the control unit 107 searches a route for traveling to the set destination from the map DB 131 and displays the route on the monitor 124 to start navigation.

When no position information exists (step S604; NO), the control unit 107 returns to the processing of step S601.

### (Case 3) When setting a destination based on a prepared destination list:

The control unit 107 reads out the map DB 131 stored in the storage unit 106, and causes the monitor 124 to display a prepared destination list such as that shown in FIG. 7(c) (step S608).

The destination list may be prepared based on map data stored in the map DB 131. For example, in addition to creating, in advance, a destination list separated into hierarchical levels such as according to prefecture name, city/town name, or the like, a destination list may be created in the order of the Japanese syllabary or in alphabetical order, or may be created by the control unit 107 based on a descending order of the number of times or the frequency in which positions are set as a destination or a preferential order arbitrarily set by the user.

In addition, the control unit 107 may store points and areas previously set as a destination in correlation with corresponding information in a destination list, and cause such points and areas to be displayed ahead of other candidates or displayed highlighted so as to be more prominent than other candidates.

The control unit 107 determines whether or not any of the destinations have been selected from the destination list by the user (step S609).

When a destination is not selected (step S609; NO), the control unit 107 waits until any of the destinations among the destination list is selected by the user. At this point, the control unit 107 may cause the monitor 124 to display a button 704 for once again selecting a setting method, whereby the processing is arranged so as to return to step S601 when the button 704 is pressed.

When a destination has been selected (step S609; YES), the control unit 107 sets the selected destination as the destination of navigation to be performed by the navigation device 100 (step S605). Subsequently, in the same manner as in Case 1, the control unit 107 searches a route for traveling to the set destination from the map DB 131 and displays the route on the monitor 124 to start navigation.

As shown, according to the present embodiment, the navigation device 100 is capable of setting a navigation destination based on calling/called operation history or a telephone book stored in the mobile communication device 150. Such a destination includes a final destination as well as transit points and stop-off points prior to arriving at the final destination. For example, the user can set a current position of a partner with whom the user had previously talked or a partner registered in the telephone book as a navigation destination without having to perform troublesome procedures.

The navigation device 100 can be arranged to display a map image including a position that can be set as a destination based on telephone book data 132 or history data 133 of calling/called operations stored in the storage unit 106. Specifically, in step S605, instead of setting a navigation destination or in addition to setting a navigation destination, the control unit 107 acquires map data including a position indicated by position information included in partner information correlated with the selected telephone book data 132 or history data 133 from the map DB 131, and causes the monitor 124 to display a map image including a point or area indicated by the position information or a map image including a destination. For example, as shown in FIGS. 7(a) to 7(c), the control unit 107 causes the monitor 124 to display a button 705 for displaying map positions of respective destination candidates, and when the button is pressed, causes the candidate positions to be displayed together with the map. Moreover, it is to be understood that FIGS. 7(a) to 7(c) are merely screen configuration examples and changes can be arbitrarily made thereto.

### (Second embodiment)

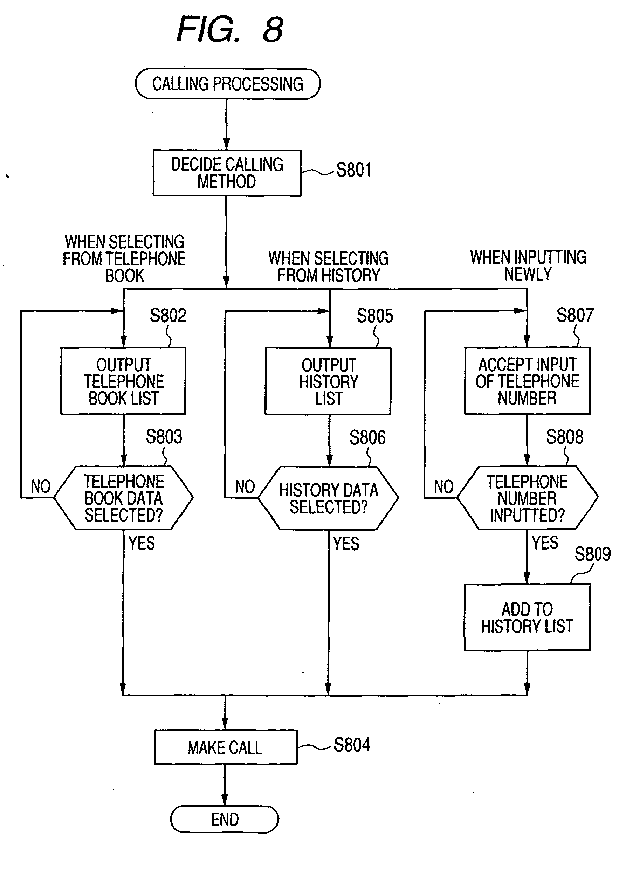

Next, another embodiment of the present invention will be described. The present embodiment differs from the embodiment described above in that the navigation device 100 causes the mobile communication device 150 to make a call based on telephone book data 132 or history data 133 of calling/called operations. FIG. 8 is a flowchart for describing calling processing performed by the various units of the navigation device 100 working in collaboration with each other.

### (Calling processing)

First, the control unit 107 determines which method among (1) calling using telephone book data 132, (2) calling using history data 133, and (3) calling by newly accepting input of a telephone number is to be used by the mobile communication device 150 when making/receiving a call (step S801). For example, the control unit 107 causes the monitor 124 to display a screen that enables the user to select which of the methods (1) to (3) described above is to be used to make a call, and makes a determination based on an instruction input by the user.

### (Case 1) When making a call based on telephone book data 132:

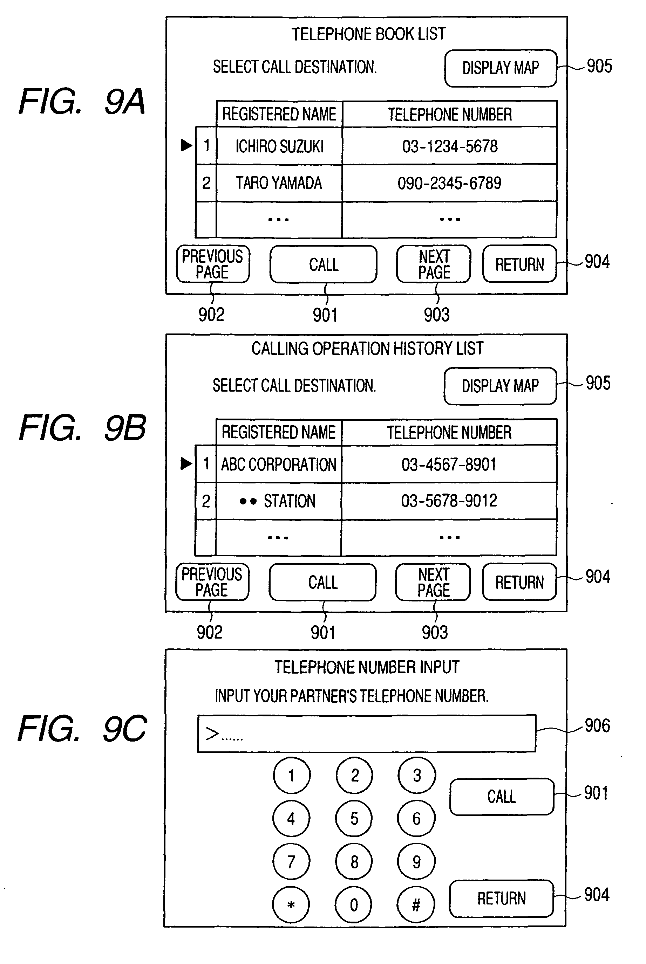

The control unit 107 reads out telephone book data 132 stored in the storage unit 106, and causes the monitor 124 to display a telephone book list such as that shown in FIG. 9(a) (step S802). The control unit 107 causes a button 901 for deciding a call destination and making a call, buttons 902 and 903 for displaying a next (or previous) page, and the like to be displayed on the monitor screen. Either all information of respective records of the telephone book data 132 or only a part thereof (e.g., registered names) may be included in the telephone book list. In the case the telephone book data 132 is stored in advance with a hierarchical structure including subfolders and the like, the control unit 107 first has the user select a subfolder, and subsequently displays a list of telephone book data 132 belonging to the selected subfolder. When the hierarchy consists of a plurality of hierarchical levels, repeating this procedure shall suffice.

The control unit 107 determines whether or not any of the telephone book data 132 items in the telephone book list have been selected by the user (step S803).

When an telephone book data 132 item is not selected (step S803; NO), the control unit 107 waits until any of the telephone book data 132 items is selected by the user. At this point, the control unit 107 may cause the monitor 124 to display a button 904 for once again selecting a setting method, whereby the processing is arranged so as to return to step S801 when the button 904 is pressed.

When an telephone book data 132 item is selected (step S803; YES), the control unit 107 causes the mobile communication device 150 to make a call to a telephone number corresponding to the selected telephone book data 132 item (step S804). As a result, the user is able to talk using the speaker 122 and the microphone 123 of the navigation device 100.

### (Case 2) When making a call based on history data 133:

The control unit 107 reads out history data 133 stored in the storage unit 106, and causes the monitor 124 to display a calling operation history list such as that shown in FIG. 9(b) (step S805). A called operation history list may be used instead. The control unit 107 may accept an instruction input specifying whether a calling operation history list or a called operation history list is to be displayed from the user, and display either of the history lists based on the instruction input. Alternatively, the control unit 107 may display both the calling and called operation history lists on the same screen. The calling and called operation history lists may either include all information of respective records of the history data 133 or a part thereof (e.g., only telephone numbers, or only registered names if available).

The control unit 107 determines whether or not any of the history data 133 items in the calling (called) history list has been selected by the user (step S806).

When an telephone book data 132 item is not selected (step S806; NO), the control unit 107 waits until any of the history data 133 items is selected by the user. At this point, the control unit 107 may cause the monitor 124 to display a button 904 for once again selecting a setting method, whereby the processing is arranged so as to return to step S801 when the button 904 is pressed.

When an telephone book data 132 item has been selected (step S806; YES), the control unit 107 causes the mobile communication device 150 to make a call to a telephone number corresponding to the selected history data 133 item (step S804).

### (Case 3) When newly inputting a telephone number:

The control unit 107 accepts an input of a telephone number from the user (step S807). The user operates the touch panel 125 of the operation unit 104 or the like to input a telephone number of a call destination into a number input area 906.

The control unit 107 determines whether a telephone number has been inputted from the user (step S808). For example, the control unit 107 determines that a telephone number has been inputted when the telephone number includes a predetermined number of digits and the transmission button 901 has been pressed, and otherwise determines that a telephone number has not been inputted.

When a telephone number has not been inputted (step S808; NO), the control unit 107 waits until a telephone number of the call destination is inputted by the user. At this point, the control unit 107 may cause the monitor 124 to display a button 904 for once again selecting a calling method, whereby the processing is arranged so as to return to step S801 when the button 904 is pressed.

When a telephone number has been inputted (step S808; YES), the control unit 107 adds the inputted telephone number to a history list (step S809).

Subsequently, the control unit 107 causes the mobile communication device 150 to make a call to the inputted telephone number (step S804).

As shown, according to the present embodiment, the navigation device 100 is capable of causing the connected mobile communication device 150 to make a call based on a telephone book or calling/called operation history stored in the storage unit 106. For example, the user can make a call from the navigation device 100 using a telephone book or calling/called operation history stored in advance.

The control unit 107 may also arrange partner information to be stored in correlation with an inputted telephone number. In this case, after the processing of step S808 or S809, the control unit 107 need only accept input of partner information from the user and cause the inputted data to be stored in the partner information in the history data 133. In addition, the control unit 107 may also be arranged so as to determine whether or not an inputted telephone number is already stored in the telephone book data 132 or the history data 133, wherein if not stored, accept input of partner information, and if already stored, correlate the partner information of the telephone book data 132 or the history data 133. It is to be understood that FIGS. 9(a) to 9(c) are merely screen configuration examples and changes can be arbitrarily made thereto.

The navigation device 100 may be arranged to display a map image including position information of a partner that can be selected as a call destination based on telephone book data 132 or history data 133 of calling/called operations stored in the storage unit 106. Specifically, when a button 905 for displaying a map including a position indicated by position information is pressed, instead of making a call to a partner or in addition to making a call to a partner in step S804, the control unit 107 acquires map data including position information included in partner information correlated with the selected telephone book data 132 or history data 133 from the map DB 131, and causes the monitor 124 to display a map image including a point or area indicated by the position information or a map image including a destination.

### (Third embodiment)

Next, another embodiment of the present invention will be described. The present embodiment differs from the embodiments described above in that the navigation device 100 causes the mobile communication device 150 to make a call based on telephone book data 132 or history data 133 of calling/called operations, and a calling operation is arranged so as to be automatically performed when predetermined conditions are met.

In the present embodiment, the control unit 107 presets and causes the storage unit 106 to store a telephone number of a partner to which a call is automatically made when the current position of the navigation device 100 meets predetermined conditions. Predetermined conditions refer to, for example, "the current position of the navigation device 100 reaches within a predetermined distance range from the destination", "the current position of the navigation device 100 reaches or passes a predetermined transit point", "a predetermined period of time lapses after departing a point of departure of navigation or a transit point", and the like.

For example, when setting a destination based on telephone book data 132 or history data 133 in the destination setting processing shown in FIG. 5 described above, the control unit 107 sets a telephone number stored in the telephone book data 132 or the history data 133 as a call destination. In addition, when setting a destination based on a destination list in the destination setting processing shown in FIG. 6 described above, the control unit 107 sets a telephone number correlated in advance with the destination as a call destination. When a telephone number is not correlated with the respective destination candidates in the destination list, the control unit 107 may accept an input of a telephone number of a call destination from the user and set the accepted telephone number as the call destination.

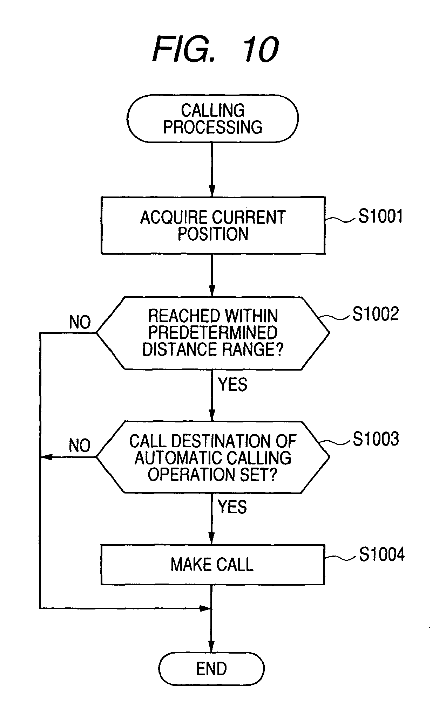

Next, calling processing according to the present embodiment will be described using the flowchart shown in FIG. 10. In the following description, an example will be used in which "the current position of the navigation device 100 is within a predetermined distance range from the destination" is set as the predetermined condition. However, other conditions may be set instead.

First, the control unit 107 acquires a current position of the navigation device 100 from the GPS module of the communication unit 101 (step S1001).

The control unit 107 determines whether or not the current position acquired in step S1001 has reached within a predetermined distance range from a set destination (step S1002).

When it is determined that the current position has reached within the predetermined distance range (step S1002; YES), the control unit 107 determines whether or not automatic calling has been set (step S1003). When automatic calling has been set (step S1003; YES), the control unit 107 causes the mobile communication device 150 to make a call to a set telephone number (step S1004). On the other hand, when automatic calling has not been set (step S1003; NO), the control unit 107 ends calling processing and does not cause the mobile communication device 150 to make a call.

When it is determined that the current position has not yet reached within the predetermined distance range (step S1002; NO), the control unit 107 ends calling processing and does not cause the mobile communication device 150 to make a call.

As shown, according to the present embodiment, the navigation device 100 is capable of causing the connected mobile communication device 150 to make a call based on a telephone book or calling/called operation history stored in the storage unit 106, and causing a call to be automatically made to a preset call destination when predetermined conditions are met. By setting automatic calling in advance, when the user's vehicle approaches the destination, the user is now able to automatically make a telephone call notifying to that effect. The user can make a call without having to directly operate the navigation device 100 or the mobile communication device 150. For example, when driving to a rendezvous point to meet a friend, by setting the rendezvous point as the destination of the navigation device 100 and further setting a telephone number at which the friend can be contacted to automatic calling, the user is able to make a call in an easy manner when reaching the vicinity of the destination.

In addition, instead of making a call in step S1004, the control unit 107 may be arranged so as to transmit an e-mail to an e-mail address registered in advance. In this case, the storage unit 106 stores an e-mail address as one item of partner information and the control unit 107 causes an e-mail to be automatically transmitted to the partner when predetermined conditions are met. The control unit 107 desirably transmits an e-mail using fixed phrases such as "I'm almost there" stored in advance in the storage unit 106. The text of the e-mail can be freely edited by the user using the touch panel 125 or the like, whereby the storage unit 106 stores the edited text in a predetermined storage area.

### (Fourth embodiment)

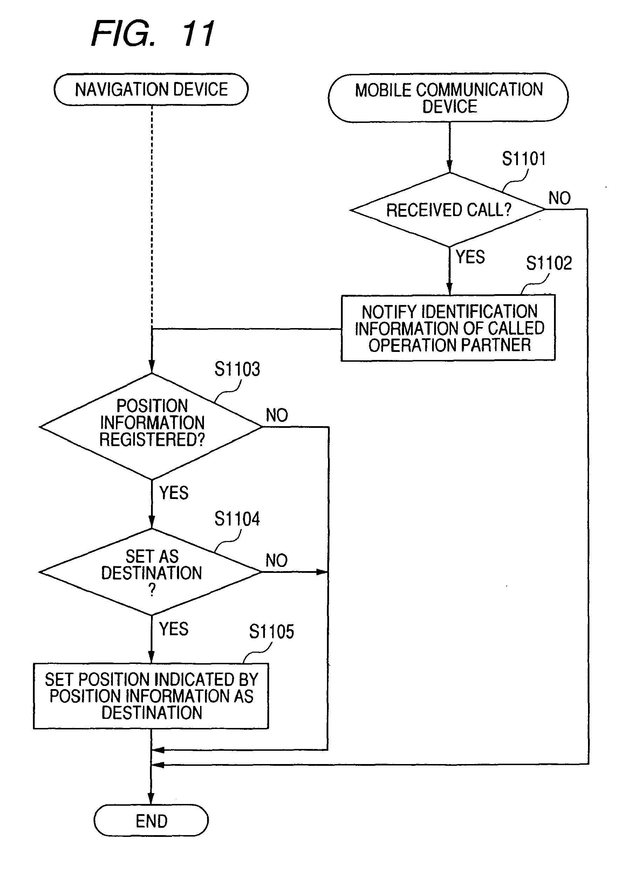

Next, another embodiment of the present invention will be described. While the navigation device 100 sets a destination using previous history of calling/called operations of the mobile communication device 150 in the embodiments described above, a destination may alternatively be set using position information correlated in advance with a communication partner when a calling operation or a called operation is performed. Hereinafter, destination setting processing according to the present embodiment will be described using the flowchart shown in FIG. 11.

First, a control unit 158 of the mobile communication device 150 determines whether or not a call has been received (step S1101).

When it is determined that a call has not been received (step S1101; NO), the control unit 158 ends the destination setting processing. That is, in this case, while the navigation device 100 continues navigation currently in progress, the navigation device 100 does not start navigation when navigation is not being performed.

When a call has been received (step S1101; YES), the control unit 158 controls the radio communication unit 151 and notifies identification information for identifying a communication partner (the partner of the called operation) to the navigation device 100 (step S1102). For example, the identification information is a registration code, a registered name, a telephone number, an e-mail address, or the like of telephone book data 171 or history data 172 corresponding to the communication partner.

The control unit 107 of the navigation device 100 receives identification information of the called operation partner from the mobile communication device 150, and determines whether or not sufficient position information for setting a destination is registered in the telephone book data 132 or history data 133 corresponding to the received identification information (step S1103).

When it is determined that position information is not registered (step S1103; NO), the control unit 107 ends the destination setting processing. That is, in this case, while the navigation device 100 continues navigation currently in progress, the navigation device 100 does not start navigation when navigation is not being performed.

When it is determined that position information has been registered (step S1103; YES), the control unit 107 determines whether or not the position indicated by the position information is to be set as the navigation destination (step S1104). For example, the control unit 107 accepts an instruction input from the user regarding whether or not the position indicated by the position data of the called operation partner is to be set as the destination, and makes the determination based on the instruction input. Alternatively, the control unit 107 may arrange to have the storage unit 106 store, in advance, a predetermined flag indicating whether or not a destination is to be automatically set when a call is received, and make a determination based on a flag value.

When it is determined that the position indicated by the position information is not to be set as the destination (step S1104; NO), the control unit 107 ends the destination setting processing. When it is determined that the position indicated by the position information is to be set as the destination (step S1104; YES), the control unit 107 sets the position indicated by the position data as the navigation destination (step S1105), and starts navigation. The destination in this case includes so-called stop-off points and transit points.

As shown, according to the present embodiment, when a call is made/received by the mobile communication device 150, the navigation device 100 is capable of setting the position of the partner of the calling/called operation as a destination and performing navigation. At this point, by registering a position of a partner in advance, the user is able to eliminate the task of finding a position from a destination list and setting a destination. While the present embodiment has been described using as an example a case where the mobile communication device 150 receives a call, a destination can be set in a similar manner when making a call.

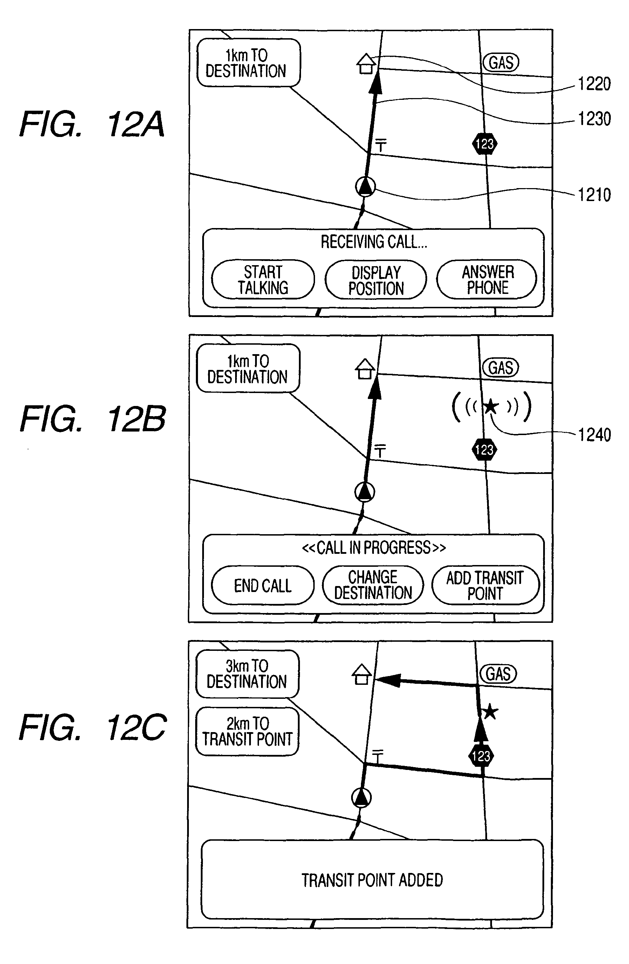

FIGS. 12(a) to 12(c) show an example of screens to be displayed on the monitor 124 according to the present embodiment. In this example, the control unit 107 has displayed a route 1230 from a current position 1210 to a destination 1220, and is currently executing navigation. When the mobile communication device 150 connected to the navigation device 100 receives a call, the control unit 107 causes a screen such as that shown in FIG. 12(a) to be displayed, and accepts an instruction input such as "answer/do not answer the phone", "display a position indicated by the position information of the communication partner", "set position indicated by the position information of the communication partner as the destination", and the like from the user. In addition to telephone calls, the above procedure is also applicable to e-mails. Furthermore, in addition to called operations, the above procedure is also applicable to calling operations.

When sufficient information for setting a destination is included in the position information of the communication partner, the control unit 107 causes a screen such as that shown in FIG. 12(b) to be displayed, accepts an instruction input such as "change destination", "set destination", or "add transit point" from the user, and changes, sets or adds a destination based on the instruction input. In the present diagram, the control unit 107 has a position 1240 stored in advance in the storage unit 106 and which is indicated by the position information of the communication partner displayed together with the navigation screen.

When accepting an instruction input to change, set, or add a destination, the control unit 107 causes a screen such as that shown in FIG. 12(c) to be displayed, and searches and displays a route after the change, setting, or addition. In the present diagram, the control unit 107 has changed the route navigated up to then to a route newly searched with the position 1240 indicated by the position information of the communication partner as a transit point and is displaying the newly searched route.

The present invention is not limited to the embodiments described above and various modifications and applications are possible. In addition, the respective components of the embodiments described above can be freely combined.

A program for causing the navigation device 100 to operate as all of or part of a device may be stored in a computer-readable storage medium such as a memory card, a CD-ROM, a DVD, an MO (Magneto Optical disk) to be distributed, whereby the program may be installed in a different computer to cause the computer to operate as the means described above or have the computer execute the steps described above.

In addition, the program may be arranged to be stored in a disk device or the like included in a server device on the Internet and, for example, superimposed on a carrier wave to be downloaded to a computer or the like.

As described above, according to the present invention, a navigation device, a navigation system, a navigation method, and a program suitable for supporting navigation using information stored in a mobile communication device can now be provided.

## Claims

1. A navigation device which guides a route from a point of departure to a destination, the device comprising:
a map data storage unit for storing map data;
a position data storage unit for correlating and storing identification information of a communication partner of a mobile communication device connected to the navigation device acquired from the mobile communication device and position data indicating a position of the communication partner;
a measurement unit for measuring a position of the navigation device;
a setting unit for accepting an instruction input that selects identification information stored in the position data storage unit from a user to set a position indicated by position data corresponding to the selected identification information as the destination; and
an output unit for acquiring, from the map data storage unit, map data indicating a route from a position measured by the measurement unit to the destination set by the setting unit to output the acquired map data.

2. The navigation device according to claim 1, wherein
the identification information includes a telephone number or an e-mail address of a partner of communication performed using the mobile communication device.

3. The navigation device according to claim 2, further comprising
a calling operation control unit which, when the position measured by the measurement unit reaches within a predetermined distance range from the destination set using the setting unit, either
(a) causes the mobile communication device to call a telephone number indicated by the identification information or
(b) causes the mobile communication device to send an e-mail to an e-mail address indicated by the identification information.

4. The navigation device according to claim 2, further comprising:
a timer unit that measures a period of time elapsed since departing the point of departure; and
a calling operation control unit which, when the period of time measured by the timer unit reaches or exceeds a predetermined period of time, either
(a) causes the mobile communication device to call a telephone number indicated by the identification information or
(b) causes the mobile communication device to send an e-mail to an e-mail address indicated by the identification information.

5. A navigation system comprising a mobile communication device and a navigation device which guides a route from a point of departure to a destination, wherein
the mobile communication device includes:
an identification information storage unit for storing, in advance, identification information of a communication partner; and
a communication unit for receiving a call from an external communication device or for calling an external communication device based on a request from the navigation device, while
the navigation device includes:
a map data storage unit for storing map data;
a position data storage unit for acquiring the identification information from the mobile communication device to correlate and store the acquired identification information and position data indicating a position;
a measurement unit for measuring a position of the navigation device;
a setting unit for accepting an instruction input selecting identification information stored in the position data storage unit from a user, and sets a position indicated by position data corresponding to the selected identification information as the destination;
an output unit for acquiring, from the map data storage unit, map data indicating a route from a position measured by the measurement unit to the destination set by the setting unit to output the acquired map data; and
a request unit for requesting the mobile communication device to make a call based on the identification information stored in the position data storage unit and the position measured by the measurement unit

6. The navigation system according to claim 5, wherein
the mobile communication device further comprises a notification unit which, when the communication unit receives a call from an external communication device, acquires identification information of the communication device from the identification information storage unit and notifies the identification information to the navigation unit, and
the setting unit acquires position data corresponding to the identification information notified by the notification unit from the position data storage unit and sets the position indicated by the acquired position data as the destination.

7. The navigation system according to claim 5 or 6, wherein the request unit requests the mobile communication unit to make a call based on the identification information when the position measured by the measurement unit reaches within a predetermined distance range from the destination set by the setting unit.

8. The navigation system according to claim 5 or 6, further comprising
a timer unit that measures a period of time elapsed since departing the point of departure, wherein
the request unit requests the mobile communication unit to make a call based on the identification information when the period of time measured by the timer unit reaches or exceeds a predetermined period of time.

9. A navigation method to be executed by a navigation device which includes a storage unit and guides a route from a point of departure to a destination, wherein
the storage unit stores map data, and correlates and stores identification information of a communication partner of a mobile communication device connected to the navigation device acquired from the mobile communication device and position data indicating a position of the communication partner,
the navigation method comprising:
a measurement step for measuring a position of the navigation device;
a setting step for accepting an instruction input that selects identification information stored in the storage unit from a user, and setting a position indicated by position data corresponding to the selected identification information as the destination; and
an output step for acquiring map data indicating a route from a position measured in the measurement step to the destination set in the setting step from the storage unit, and outputting the acquired map data.

10. A program that causes a computer which guides a route from a point of departure to a destination to function as:
a map data storage unit for storing map data;
a position data storage unit for correlating and storing identification information of a communication partner of a mobile communication device connected to the computer acquired from the mobile communication device and position data indicating a position of the communication partner;
a measurement unit for measuring a position of the computer;
a setting unit for accepting an instruction input that selects identification information stored in the position data storage unit from a user to set a position indicated by position data corresponding to the selected identification information as the destination; and
an output unit for acquiring, from the map data storage unit, map data indicating a route from a position measured by the measurement unit to the destination set by the setting unit to output the acquired map data.
